# EUROPEAN PATENT SPECIFICATION

(11) **EP 1 560 203 B1**
(45) Date of publication and mention of the grant of the patent: **11.04.2007**
(21) Application number: 03705362.6
(22) Date of filing: 20.02.2003
(51) Int. Cl.: G11B 5/64, G11B 5/73

(54) **VERTICAL MAGNETIC RECORDING MEDIUM**
VERTIKAL-MAGNETAUFZEICHNUNGSMEDIUM
SUPPORT MAGNETIQUE D'ENREGISTREMENT VERTICAL

(43) Date of publication of application: 03.08.2005
(73) Proprietor: FUJITSU LIMITED, Kawasaki-shi, Kanagawa 211-8588 (JP)
(72) Inventor: INAMURA, Ryosaku, Fujitsu Limited, Kawasaki-shi, Kanagawa 211-8588 (JP); TAKESHITA, Hiroto, Fujitsu Limited, Kawasaki-shi, Kanagawa 211-8588 (JP); SUGIMOTO, Toshio, Fujitsu Limited, Kawasaki-shi, Kanagawa 211-8588 (JP); SHIMODA, Kazumasa, Fujitsu Limited, Kawasaki-shi, Kanagawa 211-8588 (JP); OSHIMA, Takenori, Fujitsu Limited, Kawasaki-shi, Kanagawa 211-8588 (JP); MAEDA, Maki, Fujitsu Limited, Kawasaki-shi, Kanagawa 211-8588 (JP); UZUMAKI, Takuya, Fujitsu Limited, Kawasaki-shi, Kanagawa 211-8588 (JP); TANAKA, Atsushi, Fujitsu Limited, Kawasaki-shi, Kanagawa 211-8588 (JP)
(74) Representative: Fenlon, Christine Lesley
(86) International application number: PCT/JP2003/001874
(87) International publication number: WO 2004/075178

(56) References cited:
- JP-A- 5 028 453
- JP-A- 7 334 832
- JP-A- 11 283 227
- JP-A- 11 283 228
- JP-A- 2000 030 236
- JP-A- 2001 023 141
- JP-A- 2001 189 010
- JP-A- 2001 256 640
- JP-A- 2001 283 428
- JP-A- 2002 109 720
- JP-A- 2002 197 635
- JP-A- 2002 203 306
- JP-A- 2002 216 333
- JP-A- 2002 304 722
- JP-A- 2002 334 424
- JP-A- 2002 352 409
- JP-A- 2003 016 620
- US-A- 5 599 580
- US-A1- 2001 033 949
- US-A1- 2002 127 433
- US-A1- 2002 160 232

## Description

### TECHNICAL FIELD

The present invention relates to a perpendicular magnetic recording medium in general utilized in a magnetic recording medium drive such as a hard disk drive (HDD).

### BACKGROUND ART

A perpendicular magnetic recording medium is well known, for example from US-A1-2002127433. The perpendicular magnetic recording medium includes a so-called soft magnetic underlayer. A magnetic recording layer extends on the surface of the soft magnetic underlayer. When a write head is opposed to the magnetic recording layer, the magnetic recording layer is positioned between the write head and the soft magnetic underlayer. A circulation path is established between the write head and the soft magnetic underlayer for magnetic flux. This serves to increase the magnetic field acting on the recording magnetic layer. A sharp gradient can be ensured for the magnetic field passing through the magnetic recording layer. A sharp information bit can be established in the magnetic recording layer.

The axis of easy magnetization in the magnetic recording layer is preferably aligned in the direction perpendicular to the surface of the substrate and the soft magnetic underlayer. A uniform crystalline orientation is established in a predetermined direction for the crystalline grains in the magnetic recording layer so as to establish the mentioned magnetic anisotropy. The uniform crystalline orientation can be achieved based on the epitaxy. A non-magnetic orientation controller layer is formed on the surface of the soft magnetic underlayer prior to formation of the magnetic recording layer so as to control the crystalline orientation in the magnetic recording layer.

The non-magnetic orientation controller layer should have a sufficient thickness. A reduced thickness of the non-magnetic orientation controller layer induces a failure in sufficient establishment of the uniform crystalline orientation in the magnetic recording layer. An increased thickness of the non-magnetic orientation controller layer serves to distance the write head from the soft magnetic underlayer. This causes reduction in the intensity of the magnetic field acting on the magnetic recording layer. The gradient of the magnetic field should be moderated in this case. Sharp recording bits cannot be established in the magnetic recording layer.

### DISCLOSURE OF THE INVENTION

It is accordingly an object of the present invention to provide a multilayered structure film contributing to reduction in the thickness of the non-magnetic orientation controller layer underneath the magnetic crystalline layer. It is an object of the present invention to provide a multilayered structure film contributing to improvement in the characteristic of electromagnetic transduction of a perpendicular magnetic recording medium.

According to a first aspect of the present invention, there is provided a perpendicular magnetic recording medium comprising: a magnetic orientation controller layer including crystalline grains located adjacent to each other, said magnetic orientation controller layer serving as a layer for controlling crystalline orientation in an upper layer; a non-magnetic orientation controller layer extending on a surface of the magnetic orientation controller layer and including crystalline grains located adjacent to each other, said non-magnetic orientation controller layer serving as a layer for controlling crystalline orientation in an upper layer; and a magnetic recording layer extending on a surface of the non-magnetic orientation controller layer and including crystalline grains; characterised in that: said crystalline grains in the magnetic orientation controller layer have a face-centered cubic structure, (111) planes of the crystalline grains of the magnetic orientation controller layer being preferentially oriented in parallel with a surface of a substrate in the perpendicular magnetic recording medium; said crystalline grains of the non-magnetic orientation controller layer have a hexagonal close-packed structure, (002) planes of the crystalline grains of the non-magnetic orientation controller layer being preferentially oriented in parallel with the surface of the substrate; and said crystalline grains of saidmagnetic recording layer have a hexagonal close-packed structure, axes of easy magnetization of the crystalline grains of the magnetic recording layer being aligned in a direction perpendicular to the surface of the substrate; wherein each of the said crystalline grains of the non-magnetic orientation controller layer grows from one of said crystalline grains of the magnetic orientation controller layer and each of said crystalline grains of the magnetic recording layer grows from one of the crystalline grains of the non-magnetic orientation controller layer.

The perpendicular magnetic recording medium allows a reliable establishment of a uniform crystalline orientation based on the influences from the magnetic and non-magnetic orientation controller layers. The crystalline orientation can reliably be controlled in the magnetic recording layer as compared with the case where the non-magnetic orientation controller layer is solely employed to control the crystalline orientation in the magnetic recording layer. The axes of easy magnetization can thus reliably be aligned in the direction perpendicular to the surface of the magnetic recording layer in the individual crystalline grains in the magnetic recording layer. The perpendicular magnetic recording medium enjoys a higher performance in the property of electromagnetic transduction. In addition, a reliable establishment of a uniform crystalline orientation can be achieved without an increase in the thickness of the non-magnetic orientation controller layer.

The perpendicular magnetic recording medium may further comprise a soft magnetic underlayer spaced from the magnetic recording layer across the magnetic and non-magnetic orientation controller layers. In this case, if the axis of easy magnetization is aligned in the direction in parallel with the surface of the soft magnetic underlayer in the magnetic orientation controller layer, the magnetic orientation controller layer also functions as a soft magnetic underlayer in combination with the soft magnetic underlayer. A distance can thus be reduced between the soft magnetic underlayer and a write head or an electromagnetic transducer. This reduced distance contributes to establishment of sharp recording bits in the magnetic recording layer.

The magnetic orientation controller layer may include at least one of Fe, Co and Ni. The magnetic orientation controller layer may further include at least one element selected from a group consisting of Mo, Cr, Cu, V, Nb, Al, Si and B

The perpendicular magnetic recording medium may further comprise a basement layer receiving the magnetic orientation controller layer. The basement layer may be employed to control the crystalline orientation and size of the crystalline grains in the magnetic orientation controller layer. The basement layer may include at least one element selected from a group consisting of Ta, C, Mo, Ti, W, Re, Os and Hf.

According to a second aspect of the present invention, there is provided a multilayered structure film comprising:
a magnetic orientation controller layer including crystalline grains located adjacent to each other, said magnetic orientation controller layer serving as a layer for controlling crystalline orientation in an upper layer; a non-magnetic orientation controller layer extending on a surface of the magnetic orientation controller layer and including crystalline grains located adjacent to each other, said non-magnetic orientation controller layer serving as a layer for controlling crystalline orientation in an upper layer; and a crystalline layer extending on a surface of the non-magnetic orientation controller layer and including crystalline grains; characterised in that:
   said crystalline grains have a face-centered cubic structure, (111) planes of the crystalline grains of the magnetic orientation controller layer being preferentially oriented in parallel with a surface of the magnetic orientation controller layer; said crystalline grains of the non-magnetic orientation controller layer have a hexagonal close-packed structure, (002) planes of the crystalline grains of the non-magnetic orientation controller layer being preferentially oriented in parallel with the surface of the magnetic orientation controller layer; and
   said crystalline grains have a hexagonal close-packed structure, axes of easy magnetization of the crystalline grains of the said crystalline layer being aligned in a direction perpendicular to the surface of the magnetic orientation controller layer; wherein each of said crystalline grains of the non-magnetic orientation controller layer grows from one of said crystalline grains of the magnetic orientation controller layer and each of said crystalline grains of the said crystalline layer grows from one of the said crystalline grains of the non-magnetic orientation controller layer.

The multilayered structure film allows a reliable establishment of a uniform crystalline orientation in the crystalline layer. The crystalline orientation can reliably be controlled in the crystalline layer as compared with the case where the non-magnetic orientation controller layer is solely employed to control the crystalline orientation in the crystalline layer. A reliable establishment of a uniform crystalline orientation can be achieved without an increase in the thickness of the non-magnetic orientation controller layer.

### BRIEF DESCRIPTION OF THE DRAWINGS

Fig. 1 is a plan view schematically illustrating the structure of a hard disk drive (HDD) as a specific example of a magnetic recording medium drive.
Fig. 2 is an enlarged partial sectional view of a magnetic recording disk employed in the hard disk drive.
Fig. 3 is an enlarged partial sectional view of a substrate in the magnetic recording disk for illustrating the process of forming a soft magnetic underlayer.
Fig. 4 is an enlarged partial sectional view of the substrate for illustrating the process of forming a basement layer.
Fig. 5 is an enlarged partial sectional view of the substrate for illustrating the process of forming a magnetic orientation controller layer.
Fig. 6 is an enlarged partial sectional view of the substrate for illustrating the process of forming a non-magnetic orientation controller layer.
Fig. 7 is an enlarged partial sectional view of the substrate for illustrating the process of forming a magnetic recording layer.
Fig. 8 is a graph illustrating the rocking curve obtained from X-ray diffraction.

### BEST MODE FOR CARRYING OUT THE INVENTION

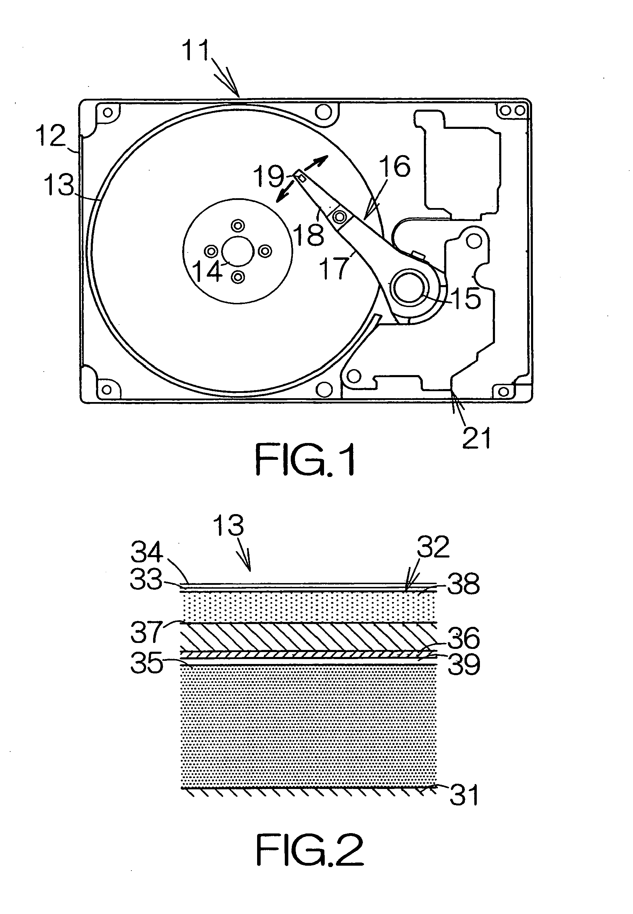

Fig. 1 schematically illustrates the interior structure of a hard disk drive (HDD) 11 as an example of a magnetic recording medium drive or storage device. The HDD 11 includes a box-shaped main enclosure 12 defining an inner space of a flat parallelepiped, for example. At least one magnetic recording disk 13 is incorporated in the inner space within the main enclosure 12. The magnetic recording disk 13 belongs to a so-called perpendicular magnetic recording medium. The magnetic recording disk or disks 13 is mounted on the driving shaft of a spindle motor 14. The spindle motor 14 is allowed to drive the magnetic recording disk or disks 13 for rotation at a higher revolution rate such as 7,200rpm, 10,000rpm, or the like, for example. A cover, not shown, is coupled to the main enclosure 12 so as to def ine the closed inner space between the main enclosure 12 and itself.

A head actuator 16 is coupled to a vertical support shaft 15. The head actuator 16 includes rigid actuator arms 17 extending in the horizontal direction from the vertical support shaft 15, and head suspensions 18 respectively attached to the tip ends of the actuator arms 17 so as to extend in the forward direction from the corresponding actuator arms 17. As conventionally known, a flying head slider 19 is cantilevered at the tip end of the elastic suspension 18 through a gimbal, not shown. The elastic suspension 18 serves to urge the flying head slider 19 toward the surface of the magnetic recording disk 13. When the magnetic recording disk 13 rotates, the flying head slider 19 receives airflow generated along the surface of the rotating magnetic recording disk 13. The airflow serves to generate a lift on the flying head slider 19. The flying head slider 19 is thus allowed to keep flying above the surface of the magnetic recording disk 13 during the rotation of the magnetic recording disk 13 at a higher stability established by the balance between the lift and the urging force of the elastic suspension 18.

An electromagnetic transducer, not shown, is mounted on the flying head slider 19 in a conventional manner. The electromagnetic transducer includes a read element such as a giant magnetoresistive (GMR) element or tunnel junction magnetoresistive (TMR) element and a write element such as a single pole head or inductive thin film head, for example. The GMR element or TMR element is designed to detect a magnetic bit data by utilizing variation of the electric resistance in a spin valve film or tunnel junction film in response to the inversion of the magnetic polarity in a magnetic field acting from the magnetic recording disk 13. The single pole head or inductive thin film head is designed to write a magnetic bit data onto the magnetic recording disk 13 by utilizing a magnetic field induced in a conductive swirly coil pattern, not shown, for example.

When the head actuator 16 is driven to swing about the support shaft 15 during the flight of the flying head slider 19, the flying head slider 19 is allowed to cross the recording tracks defined on the magnetic recording disk 13 in the radial direction of the magnetic recording disk 13. This radial movement serves to position the electromagnetic transducer on the flying head slider 19 right above a target recording track on the magnetic recording disk 13. A power source 21 such as a voice coil motor (VCM) may be utilized to realize the rotation of the head actuator 16 around the support shaft 15. As conventionally known, in the case where two or more magnetic recording disks 13 are incorporated within the inner space of the main enclosure 12, a pair of the actuator arm 17, 17 and a pair of the flying head slider 19, 19 are disposed between the adjacent magnetic recording disks 13.

Fig. 2 illustrates a vertical sectional view of the magnetic recording disk 13. The magnetic recording disk 13 includes a substrate 31 as a support member and multilayered structure films 32 extending on the front and back surfaces of the substrate 31. The substrate 31 may be a glass substrate, for example. Alternatively, an aluminum substrate, a silicon substrate, or the like, may be employed as the substrate 31. Magnetic information is recorded in the multilayered structure film 32. A protection overcoat 33 such as a diamond-like-carbon (DLC) film and a lubricating agent film 34 such as a perfluoropolyether (PFPE) film may be formed to cover over the surface of the multilayered structure film 32.

The multilayered structure film 32 includes a soft magnetic underlayer 35 extending on the front and back surfaces of the substrate 31, respectively. A CoNbZr film having the thickness of 195nm approximately may be employed as the underlayer 35. The axis of easy magnetization is set in the direction parallel to the surface of the substrate 31. Amicrocrystal precipitation alloy film such as a FeTaC film, or a crystalline alloy film such as a NiFe film may be employed as the soft magnetic underlayer in place of the aforementioned amorphous alloy film. Alternatively, the soft magnetic underlayer 35 may be a multilayered film including soft magnetic layers and non-magnetic layers alternately layered on one another, for example.

A magnetic orientation controller layer 36 extends on the surface of the soft magnetic underlayer 35. The magnetic orientation controller layer 36 includes crystalline grains located adjacent to each other on the surface of the soft magnetic underlayer 35. The magnetic orientation controller layer 36 may be made of a soft magnetic metallic material. The magnetic orientation controller layer 36 may include at least one of Fe, Co and Ni. Here, a NiFe film having the thickness of 5nm approximately is utilized as the magnetic orientation controller layer 36. One or more elements selected from a group consisting of Mo, Cr, Cu, V, Nb, Al, Si and B may also be added to the magnetic orientation controller layer 36 in addition to the magnetic metallic material, for example. A face-centered cubic (fcc) structure is established in the individual crystalline grains in the magnetic orientation controller layer 36. The (111) planes of the crystalline grains are preferentially oriented in the direction parallel to the surface of the substrate 31 in the magnetic orientation controller layer 36.

A non-magnetic orientation controller layer 37 extends on the surface of the magnetic orientation controller layer 36. The non-magnetic orientation controller layer 37 includes crystalline grains located adjacent to each other on the surface of the magnetic orientation controller layer 36. The individual crystalline grains in the non-magnetic orientation controller layer 37 grow from the individual crystalline grains in the magnetic orientation controller layer 36 based on the epitaxy. The non-magnetic orientation controller layer 37 may be made of a crystalline non-magnetic metallic material. Here, a Ru film having the thickness of 20nm approximately is employed as the non-magnetic orientation controller layer 37. A non-magnetic alloy film including one element selected from a group consisting of Zn, Tc, Co, Os, C (graphite) and Re may be employed in place of the Ru film. A hexagonal close-packed (hcp) structure is established in the individual crystalline grains in the non-magnetic orientation controller layer 37. The (002) planes of the crystalline grains are preferentially oriented in the direction parallel to the surface of the substrate 31 in the non-magnetic orientation controller layer 37. Otherwise, a non-magnetic alloy including at least one selected from a group consisting of Cu, Rh, Ir, Pd and Pt may be employed as the non-magnetic orientation controller layer 37. A fcc structure is established in the crystalline grains in the non-magnetic orientation controller layer 37 in this case. Additionally, the (111) planes of the crystalline grains are preferentially oriented in the direction parallel to the surface of the substrate 31 in the non-magnetic orientation controller layer 37.

A magnetic recording layer 38 extends on the surface of the non-magnetic orientation controller layer 37. The magnetic recording layer 38 includes crystalline grains located adjacent to each other on the surface of the non-magnetic orientation controller layer 37. The individual crystalline grains in the magnetic recording layer 38 grow from the individual crystalline grains in the non-magnetic orientation controller layer 37 based on the epitaxy. A hcp structure is thus established in the individual crystalline grains in the magnetic recording layer 38. The C-axis of the hcp structure, corresponding to the axis of easy magnetization, is aligned in the direction perpendicular to the surface of the substrate 31 in the crystalline grains in the magnetic recording layer 38. The magnetic recording layer 38 may be made of an alloy including Co and Cr, for example.

As is apparent from Fig. 2, a basement layer 39 may be interposed between the soft magnetic underlayer 35 and the magnetic orientation controller layer 36. The basement layer 39 may be made of at least one element selected from a group consisting of Ta, C, Mo, Ti, W, Re, Os and Hf, for example. Here, a Ta film having the thickness of 5nm approximately is employed as the basement layer 39. The Ta film serves to reliably control the orientation and size of the crystalline grains in the magnetic orientation controller layer 36. If a NiFe film is overlaid on the Ta film, for example, the (111) planes of the crystalline grains are preferentially oriented in the direction parallel to the surface of the substrate 31 in the NiFe film.

The magnetic recording disk 13 allows sufficient establishment of a uniform orientation in a predetermined direction in the crystalline grains in the magnetic recording layer 38. The crystalline orientation can reliably be controlled in the magnetic recording layer 38 as compared with the case where the non-magnetic orientation controller layer 37 is solely employed to control the crystalline orientation in the magnetic recording layer 38. The axes of easy magnetization can thus reliably be aligned in the direction perpendicular to the surface of the substrate 31 in the individual crystalline grains in the magnetic recording layer 38. The magnetic recording disk 13 enjoys a higher performance in the property of electromagnetic transduction.

Moreover, the magnetic orientation controller layer 36 serves to avoid an increase in the thickness of the non-magnetic orientation controller layer 37 in the magnetic recording disk 13. In particular, if the axis of easy magnetization is aligned in the direction in parallel with the surface of the substrate 31 in the magnetic orientation controller layer 36 in the aforementioned manner, the magnetic orientation controller layer 37 also functions as a soft magnetic underlayer in combination with the soft magnetic underlayer 35. A distance can thus be reduced between the soft magnetic underlayer and the single pole head in the electromagnetic transducer. This reduced distance contributes to establishment of sharp recording bits in the magnetic recording layer 38. The magnetic recording layer 38 is allowed to enjoy magnetization of a sufficient intensity.

Next, a brief description will be made on a method of making the magnetic recording disk 13. A disk-shaped substrate 31 is first prepared. The substrate 31 is set in a sputtering apparatus, for example. The multilayered structure film 32 is formed on the surface of the substrate 31 in the sputtering apparatus. The processes will be described later in detail. The protection overcoat 33 having a thickness in a range between 3.0nm and 10.0nm approximately is subsequently formed on the surface of the multilayered structure film 32. Chemical vapor deposition (CVD) may be utilized to form the protection overcoat 33, for example. The lubricating agent film 34 having the thickness of 1.0nm approximately is applied to the surface of the protection overcoat 33. The substrate 31 may be dipped into a solution containing perfluoropolyether, for example, to apply the lubricating agent film 34.

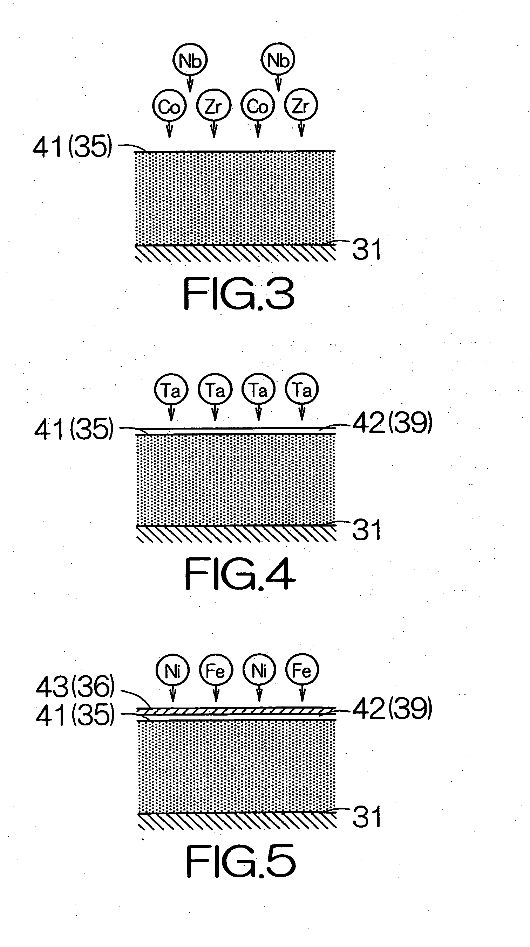

Sputtering is effected in the sputtering apparatus so as to form the multilayered structure film 32. As shown in Fig. 3, the soft magnetic underlayer 35 is formed on the surface of the substrate 31. Here, a CoNbZr film 41 is formed, for example. A CoNbZr target is set in the chamber of the sputtering apparatus. Co atoms, Nb atoms and Zr atoms are sputtered from the target to deposit on the surface of the substrate 31. The thickness of the CoNbZr film 41 is set at 195nm approximately, for example. Alternatively, other method may be employed to from the soft magnetic underlayer 35.

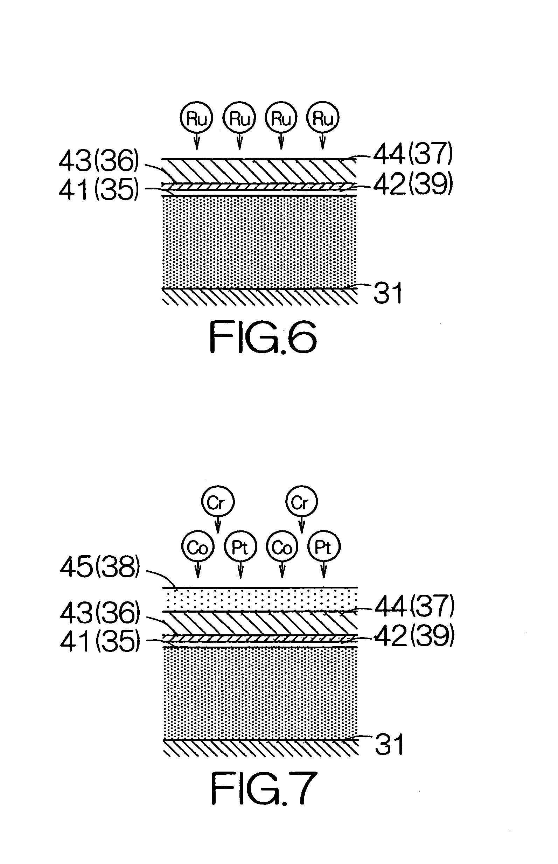

As shown in Fig. 4, the basement layer 39 is then formed on the surface of the CoNbZr film 41. Here, a Ta film 42 is formed, for example. A Ta target is set in the chamber of the sputtering apparatus. Ta atoms are sputtered from the target to deposit on the surface of the CoNbZr film 41. The thickness of the Ta film 42 is set at 5nm approximately, for example.

As shown in Fig. 5, the magnetic orientation controller layer 36 is then formed on the surface of the Ta film 42. Here, a NiFe film 43 is formed, for example. A NiFe target is set in the chamber of the sputtering apparatus. Ni atoms and Fe atoms are sputtered from the target to deposit on the surface of the Ta film 42. Crystalline grains grow in the NiFe film 43. The thickness of the NiFe film43 is set at 5nm approximately, for example.

As shown in Fig. 6, the non-magnetic orientation controller layer 37 is then formed on the surface of the NiFe film 43. Here, a Ru film 44 is formed, for example. A Ru target is set in the chamber of the sputtering apparatus. Ru atoms are sputtered from the target to deposit on the surface of the NiFe film 43. Crystalline grains grow in the Ru film 44 from the individual crystalline grains in the NiFe film 43. The thickness of the Ru film 44 is set at 20nm approximately, for example.

As shown in Fig. 7, the magnetic recording layer 38 is then formed on the surface of the Ru film 44. Here, a CoCrPt film 45 is formed, for example. A CoCrPt target is set in the chamber of the sputtering apparatus. Co atoms, Cr atoms and Pt atoms are sputtered from the target to deposit on the surface of the Ru film 44. Crystalline grains grow in the CoCrPt film 45 from the individual crystalline grains in the Ru film 44. The thickness of the CoCrPt film 45 is set at 20nm approximately, for example. It should be noted that the substrate 31 is kept at the room temperature during the sputtering.

The inventors observed the property of the magnetic recording disk 13 made in the aforementioned manner. The inventors also prepared first and second comparative examples. A magnetic recording disk of the first comparative example included a CoNbZr film having the thickness of 200nm, a Ru film having the thickness of 20nm and a CoCrPt film having the thickness of 20nm formed in this sequence on the surface of the substrate 31 based on sputtering. A magnetic recording disk of the second comparative example included a CoNbZr film having the thickness of 200nm, a Ru film having the thickness of 40nm and a CoCrPt film having the thickness of 20nm formed in this sequence on the surface of the substrate 31 based on sputtering. A DLC film having the thickness of 4nm was formed on the surface of the CoCrPt film in both the magnetic recording disks of the comparative examples.

The inventors observed the crystalline orientation of the CoCrPt films in the example of the invention and the first comparative example based on X-ray diffraction. A peak appeared around 42 degrees. It has been confirmed that the (002) planes of the individual crystalline grains are aligned in a predetermined direction in the CoCrPt films. Specifically, the C-axes of the crystalline grains, corresponding to the axes of easy magnetization, were aligned in the direction perpendicular to the surface of the substrate in the CoCrPt films.

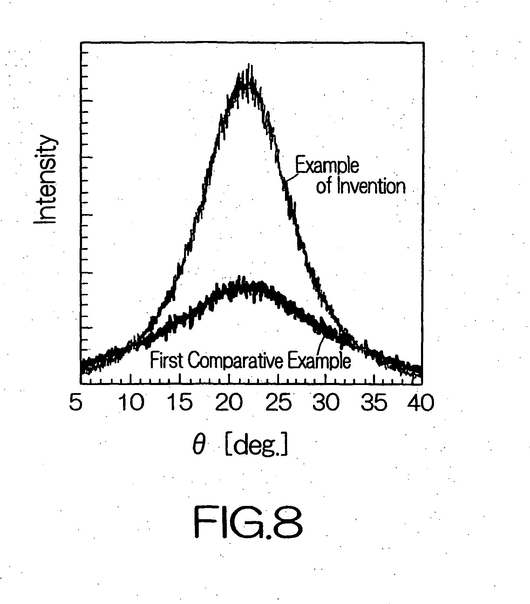

The inventors measured the rocking curve of the magnetic recording disks according to the example of the invention and the first comparative example. The (002) planes of the crystalline grains in the CoCrPt film were targeted in the measurement. As shown in Fig. 8, the measurement for the example resulted in the width of the rocking curve at the half value, Δθ50, equal to 11 degrees. The measurement for the first comparative example resulted in the width of the rocking curve at the half value, Δθ50, equal to 19 degrees. It has been confirmed that the axes of easy magnetization are well aligned in the direction perpendicular to the surface of the substrate in the CoCrPt film in the magnetic recording disk 13 of the example rather than the magnetic recording disk of the first comparative example. It should be noted that the measurement for the second comparative example resulted in the width of the rocking curve at the half value, Δθ50, equal to 11 degrees since the magnetic recording disk of the second comparative example included the Ru film of an increased thickness.

Next, the inventors measured the coercive force, Hc, and the angular ratio of coercive force, S, of the CoCrPt films based on the polar Kerr effect. The measurement for the example of the invention resulted in the coercive force equal to 380 [kA/m] and the coercive force angular ratio equal to 0.99 for the CoCrPt film. The measurement for the first comparative example resulted in the coercive force equal to 332 [kA/m] and the coercive force angular ratio equal to 0.96 for the CoCrPt film. The measurement for the second comparative example resulted in the coercive force equal to 490 [kA/m] and the coercive force angular ratio equal to 0.98 for the CoCrPt film. It has been confirmed that the magnetic recording disk 13 of the example enjoys a superior coercive force and angular ratio rather than the magnetic recording disk of the first comparative example. A superior angular ratio was observed in the magnetic recording disk 13 of the example rather than the magnetic recording disk of the second comparative example.

Furthermore, the inventors observed the dispersion of the magnetic anisotropy for CoCrPt films. The inventors prepared the modified example of the invention and modified comparative examples. The soft magnetic underlayer, the CoNbZr layer, was omitted from the aforementioned example of the invention and the first comparative example so as to provide the modified examples. The measurement for the magnetic recording disk 13 of the modified example resulted in the dispersion angles of seven degrees in the opposite directions from the vertical direction corresponding to zero degree. The magnetic recording disk 13 of the modified example exhibited the anisotropic magnetic field ranging from 948[kA/m] to 1,422[kA/m]. The measurement for the magnetic recording disk of the modified first comparative example resulted in the dispersion angles of ten degrees in the opposite directions from the vertical direction corresponding to zero degree. The magnetic recording disk 13 of the modified first comparative example exhibited the anisotropic magnetic field ranging from 553[kA/m] to 1,264[kA/m]. It has been confirmed that the magnetic recording disk of the example is allowed to enjoy reduction in the dispersion of the magnetic anisotropy rather than the magnetic recording disk of the first comparative example. Specifically, it has been proven that the magnetic recording disk of the example is allowed to enjoy a superior magnetic anisotropy rather than the magnetic recording disk of the first comparative example.

Furthermore, the characteristic of electromagnetic transduction of the magnetic recording disks according to the aforementioned example of the invention and the first comparative example were examined. Magnetic information was written into the magnetic recording disks at the linear resolution equal to 400[kFCI]. A single pole head was employed. The core width of the single pole head was set at 0.5µm. The written magnetic information was read out. A GMR element including a spin valve film was employed to read the magnetic information. The single pole head and the GMR element were mounted on the flying head slider 19 as described above. A relative velocity equal to 16.0[m/s] was set between the flying head slider 19 and the magnetic recording disk.

The measurement for the magnetic recording disk 13 of the example resulted in the S/N ratio equal to 24[dB]. The measurement for the magnetic recording disk of the first comparative example resulted in the S/N ratio equal to 16[dB]. The measurement for the magnetic recording disk of the second comparative example resulted in the S/N ratio equal to 3[dB]. It has been proven that the magnetic recording disk 13 of the example enjoys a superior S/N ratio as compared with the first and second comparative examples. The magnetic recording disk 13 of the type is expected to greatly contribute to improvement in the recording density.

At the same time, the inventors measured values D₅₀ representing the characteristic of resolution. The measurement for the magnetic recording disk 13 of the example resulted in the value D₅₀ equal to 312[kFCI]. The measurement for the magnetic recording disk of the first comparative example resulted in the value D₅₀ equal to 271[kFCI]. The measurement for the magnetic recording disk of the second comparative example resulted in the value D₅₀ equal to 225[kFCI]. The magnetic recording disk 13 of the example enjoyed a superior D₅₀ as compared with the first and second comparative examples. It has been proven in this manner that the magnetic recording disk 13 of the type enjoys improvement in the characteristic of electromagnetic transduction.

Crystalline grains of the L1₀ structure may be established in the magnetic recording layer 38 in the aforementioned multilayered structure film 32. FePt alloy may be employed to provide the magnetic recording layer 38 of the type, for example. In this case, any one of a cubic structure and a tetragonal structure may be established in the crystalline grains in the aforementioned magnetic orientation controller layer 36. In the case where the crystalline grains of a cubic structure are employed in the magnetic orientation controller layer 36, the (100) planes of the crystalline grains may preferentially be oriented in the direction parallel to the surface of the substrate 31 in the magnetic orientation controller layer 36. In the case where the crystalline grains of a tetragonal structure are employed in the magnetic orientation controller layer 36, the (001) planes of the crystalline grains may preferentially be oriented in the direction parallel to the surface of the substrate 31 in the magnetic orientation controller layer 36.

Here, any one of a cubic structure and a tetragonal structure may be established in the crystalline grains in the aforementioned non-magnetic orientation controller layer 37. The individual crystalline grains in the non-magnetic orientation controller layer 37 grow from the individual crystalline grains in the magnetic orientation controller layer 36 based on the epitaxy. In the case where the crystalline grains of a cubic structure are employed in the non-magnetic orientation controller layer 37, the (100) planes of the crystalline grains may preferentially be oriented in the direction parallel to the surface of the substrate 31 in the non-magnetic orientation controller layer 37. If the crystalline grains in the magnetic recording layer 38 grow from the crystalline grains in the non-magnetic orientation controller layer 37 of the type, the C-axes of the crystalline grains, corresponding to the axes of easy magnetization, can be aligned in the direction perpendicular to the surface of the substrate 31 in the magnetic recording layer 38. In the case where the crystalline grains of a tetragonal structure are employed in the non-magnetic orientation controller layer 37, the (001) planes of the crystalline grains may preferentially be oriented in the direction parallel to the surface of the substrate 31 in the magnetic orientation controller layer 36. If the crystalline grains in the magnetic recording layer 38 grow from the crystalline grains in the non-magnetic orientation controller layer 37 of the type, the C-axes of the crystalline grains, corresponding to the axes of easy magnetization, can be aligned in the direction perpendicular to the surface of the substrate 31 in the magnetic recording layer 38. A MgO film may be employed as the non-magnetic orientation controller layer 37 in this case, for example.

## Claims

1. A perpendicular magnetic recording medium comprising:
a magnetic orientation controller layer (36) including crystalline grains located adjacent to each other, saidmagnetic orientation controller layer (36) serving as a layer for controlling crystalline orientation in an upper layer;
a non-magnetic orientation controller layer (37) extending on a surface of the magnetic orientation controller layer (36) and including crystalline grains located adjacent to each other, said non-magnetic orientation controller layer (37) serving as a layer for controlling crystalline orientation in an upper layer; and
a magnetic recording layer (38) extending on a surface of the non-magnetic orientation controller layer (37) and including crystalline grains;
**characterised in that**:
said crystalline grains in the magnetic orientation controller layer (36) have a face-centered cubic structure, (111) planes of the crystalline grains of the magnetic orientation controller layer (36) being preferentially oriented in parallel with a surface of a substrate (31) in the perpendicular magnetic recording medium;
said crystalline grains of the non-magnetic orientation controller layer (37) have a hexagonal close-packed structure, (002) planes of the crystalline grains of the non-magnetic orientation controller layer (37) being preferentially oriented in parallel with the surface of the substrate (31); and
said crystalline grains of said magnetic recording layer (38) have a hexagonal close-packed structure, axes of easy magnetization of the crystalline grains of the magnetic recording layer (38) being aligned in a direction perpendicular to the surface of the substrate (31);
wherein each of the said crystalline grains of the non-magnetic orientation controller layer (37) grows from one of said crystalline grains of the magnetic orientation controller layer (36) and each of said crystalline grains of the magnetic recording layer (38) grows from one of the crystalline grains of the non-magnetic orientation controller layer (37).

2. The perpendicular magnetic recording medium according to claim 1, further comprising a soft magnetic underlayer (35) spaced from the magnetic recording layer across the magnetic and non-magnetic orientation controller layers (36, 37).

3. The perpendicular magnetic recording medium according to claim 1 or 2, wherein the magnetic orientation controller layer (36) includes at least one of Fe, Co and Ni.

4. The perpendicular magnetic recording medium according to claim 3, wherein the magnetic orientation controller layer (36) includes at least one element selected from a group consisting of Mo, Cr, Cu, V, Nb, Al, Si and B.

5. The perpendicular magnetic recording medium according to any preceding claim, further comprising a basement layer (39) receiving the magnetic orientation controller layer (36).

6. The perpendicular magnetic recording medium according to claim 5, wherein said basement layer (39) includes at least one element selected from a group consisting of Ta, C, Mo, Ti, W, Re, Os and Hf.

7. A multilayered structure film comprising:
a magnetic orientation controller layer (36) including crystalline grains located adjacent to each other, said magnetic orientation controller layer (36) serving as a layer for controlling crystalline orientation in an upper layer;
a non-magnetic orientation controller layer (37) extending on a surface of the magnetic orientation controller layer (36) and including crystalline grains located adjacent to each other, said non-magnetic orientation controller layer (37) serving as a layer for controlling crystalline orientation in an upper layer; and
a crystalline layer (38) extending on a surface of the non-magnetic orientation controller layer (37) and including crystalline grains;
**characterised in that**:
said crystalline grains have a face-centered cubic structure, (111) planes of the crystalline grains of the magnetic orientation controllerlayer(36)being preferentially oriented in parallel with a surface of the magnetic orientation controller layer (36);
said crystalline grains of the non-magnetic orientation controller layer (37) have a hexagonal close-packed structure, (002) planes of the crystalline grains of the non-magnetic orientation controller layer (37) being preferentially oriented in parallel with the surface of the magnetic orientation controller layer (36); and
said crystalline grains have a hexagonal close-packed structure, axes of easy magnetization of the crystalline grains of the said crystalline layer (38) being aligned in a direction perpendicular to the surface of the magnetic orientation controller layer (36);
wherein each of said crystalline grains of the non-magnetic orientation controller layer (37) grows from one of said crystalline grains of the magnetic orientation controller layer (36) and each of said crystalline grains of the said crystalline layer (38) grows from one of the said crystalline grains of the non-magnetic orientation controller layer (37).

## Patentansprüche

1. Ein magnetisches Senkrecht-Aufzeichnungsmedium, enthaltend:
eine magnetische Orientierungs-Steuerungsschicht (36), die kristalline Körnchen enthält, die zueinander benachbart angeordnet sind, wobei die magnetische Orientierungs-Steuerungsschicht (36) als eine Schicht zum Steuern kristalliner Orientierung in einer oberen Schicht dient;
eine nichtmagnetische Orientierungs-Steuerungsschicht (37), die sich auf einer Oberfläche der magnetischen Orientierungs-steuerungsschicht (36) erstreckt und kristalline körnchen enthält, die zueinander benachbart angeordnet sind, wobei die nichtmagnetische Orientierungs-Steuerungsschicht (37) als eine Schicht zum Steuern kristalliner Orientierung in einer oberen Schicht dient; und
eine magnetische Aufzeichnungsschicht (38), die sich auf einer Oberfläche der nichtmagnetischen Orientierungs-Steuerungsschicht (37) erstreckt und kristalline Körnchen enthält;
**dadurch gekennzeichnet, dass**:
die kristallinen Körnchen in der magnetischen Orientierungs-Steuerungsschicht (36) eine flächenzentrierte kubische Packung aufweisen, (111)-Ebenen der kristallinen Körnchen der magnetischen Orientierungs-Steuerungsschicht (36) bevorzugt parallel zu einer Oberfläche eines Substrats (31) in dem magnetischen Senkrecht-Aufzeichnungsmedium orientiert sind;
die kristallinen Körnchen der nichtmagnetischen Orientierungs-Steuerungsschicht (37) eine hexagonal dichteste Packung aufweisen, (002)-Ebenen der kristallinen Körnchen der nichtmagnetischen Orientierungs-Steuerungsschicht (37) bevorzugt parallel zu der Oberfläche des Substrats (31) orientiert sind; und
die kristallinen Körnchen der magnetischen Aufzeichnungsschicht (38) eine hexagonal dichteste Packung aufweisen, Achsen leichter Magnetisierung der kristallinen Körnchen der magnetischen Aufzeichnungsschicht (38) in einer Richtung senkrecht zu der Oberfläche des Substrats (31) angeordnet sind;
wobei jedes der kristallinen Körnchen der nichtmagnetischen Orientierungs-Steuerungsschicht (37) aus einem der kristallinen Körnchen der magnetischen Orientierungs-Steuerungsschicht (36) wächst und jedes der kristallinen Körnchen der magnetischen Aufzeichnungsschicht (38) aus einem der kristallinen Körnchen der nichtmagnetischen Orientierungs-Steuerungsschicht (37) wächst.

2. Magnetisches Senkrecht-Aufzeichnungsmedium nach Anspruch 1, weiter enthaltend eine weichmagnetische Unterschicht (35), die von der magnetischen Aufzeichnungsschicht durch die magnetische und nichtmagnetische orientierungs-Steuerungsschicht (36, 37) beabstandet ist.

3. Magnetisches Senkrecht-Aufzeichnungsmedium nach Anspruch 1 oder 2, wobei die magnetische Orientierungs-Steuerungsschicht (36) wenigstens eines von Fe, Co und Ni enthält.

4. Magnetisches Senkrecht-Aufzeichnungsmedium nach Anspruch 3, wobei die magnetische Orientierungs-Steuerungsschicht (36) wenigstens ein Element enthält, das aus einer Gruppe ausgewählt ist, die aus Mo, Cr, Cu, V, Nb, Al, Si und B besteht.

5. Magnetisches Senkrecht-Aufzeichnungsmedium nach einem vorhergehenden Anspruch, weiter enthaltend eine Grundschicht (39), welche die magnetische Orientierungs-Steuerungsschicht (36) aufnimmt,

6. Magnetisches Senkrecht-Aufzeichnungsmedium nach Anspruch 5, wobei die Grundschicht (39) wenigstens ein Element enthält, das aus einer Gruppe ausgewählt ist, die aus Ta, C, Mo, Ti, W, Re, Os und Hf besteht.

7. Ein mehrschichtiger Strukturfilm, enthaltend:
eine magnetische orientierungs-steuerungsschicht (36), die kristalline Körnchen enthält, die zueinander benachbart angeordnet sind, wobei die magnetische Orientierungs-Steuerungsschicht (36) als eine Schicht zum Steuern kristalliner Orientierung in einer oberen Schicht dient;
eine nichtmagnetische Orientierungs-Steuerungsschicht (37), die sich auf einer Oberfläche der magnetischen Orientierungs-Steuerungsschicht (36) erstreckt und kristalline Körnchen enthält, die zueinander benachbart angeordnet sind, wobei die nichtmagnetische Orientierungs-Steuerungsschicht (37) als eine Schicht zum Steuern kristalliner Orientierung in einer oberen Schicht dient; und
eine kristalline Schicht (38), die sich auf einer Oberfläche der nichtmagnetischen Orientierungs-Steuerungsschicht (37) erstreckt und kristalline Körnchen enthält;
**dadurch gekennzeichnet, dass**:
die kristallinen Körnchen eine flächenzentrierte kubische Packung aufweisen, (111)-Ebenen der kristallinen Körnchen der magnetischen Orientierungs-Steuerungsschicht (36) bevorzugt parallel zu einer Oberfläche der magnetischen Orientierungs-Steuerungsachicht (36) orientiert sind;
die kristallinen Körnchen der nichtmagnetischen Orientierungs-Steuerungsschicht (37) eine hexagonal dichteste Packung aufweisen, (002)-Ebenen der kristallinen Körnchen der nichtmagnetischen Orientierungs-Steuerungsschicht (37) bevorzugt parallel zu der Oberfläche der magnetischen Orientierungs-Steuerungsschicht (36) orientiert sind; und
die kristallinen Körnchen eine hexagonal dichteste Packung aufweisen, Achsen leichter Magnetisierung der kristallinen Körnchen der kristallinen Schicht (38) in einer Richtung senkrecht zu der Oberfläche der magnetischen Orientierungs-Steuerschicht (36) angeordnet sind;
wobei jedes der kristallinen Körnchen der nichtmagnetischen Orientierungs-Steuerungsschicht (37) aus einem der kristallinen Körnchen der magnetischen Orientierungs-Steuerungsschicht (36) wächst und jedes der kristallinen Körnchen der kristallinen Schicht (38) aus einem der kristallinen Körnchen der nichtmagnetischen Orientierungs-Steuerungsschicht (37) wächst.

## Revendications

1. Support d'enregistrement magnétique vertical, comprenant :
une couche de contrôle de l'orientation magnétique (36) comprenant des grains cristallins situés en position adjacente les uns aux autres, ladite couche de contrôle de l'orientation magnétique (36) servant de couche pour contrôler l'orientation des cristaux dans une couche supérieure ;
une couche de contrôle de l'orientation non magnétique (37) s'étendant sur une surface de la couche de contrôle de l'orientation magnétique (36) et comprenant des grains cristallins situés en position adjacente les uns aux autres, ladite couche de contrôle de l'orientation non magnétique (37) servant de couche pour contrôler l'orientation cristalline dans une couche supérieure ; et
une couche d'enregistrement magnétique (38) s'étendant sur une surface de la couche de contrôle de l'orientation non magnétique (37) et comprenant des grains cristallins ;
**caractérisé en ce que** :
lesdits grains cristallins dans la couche de contrôle de l'orientation magnétique (36) ont une structure cubique à face centrée, (111) les plans de grains cristallins de la couche de contrôle de l'orientation magnétique (36) étant préférentiellement orientés parallèlement à une surface d'un substrat (31) dans le support d'enregistrement magnétique vertical ;
lesdits grains cristallins de la couche de contrôle de l'orientation non magnétique (37) ont une structure hexagonale compacte, (002) des plans de grains cristallins de la couche de contrôle de l'orientation non magnétique (37) étant préférentiellement orientés parallèlement à la surface du substrat (31) ; et
lesdits grains cristallins de ladite couche d'enregistrement magnétique (38) ont une structure hexagonale compacte, les axes de magnétisation facile des grains cristallins de la couche d'enregistrement magnétique (38) étant alignés dans une direction perpendiculaire à la surface du substrat (31) ;
où chacun desdits grains cristallins de la couche de contrôle de l'orientation non magnétique (37) croît à partir d'un desdits grains cristallins de la couche de contrôle de l'orientation magnétique (36) et chacun desdits grains cristallins de la couche d'enregistrement magnétique (38) croît à partir d'un des grains cristallins de la couche de contrôle de l'orientation non magnétique (37).

2. Support d'enregistrement magnétique vertical selon la revendication 1, comprenant en outre une sous-couche magnétique molle (35) espacée de la couche d'enregistrement magnétique par la biais des couches de contrôle de l'orientation magnétique et non magnétique (36, 37).

3. Support d'enregistrement magnétique vertical selon la revendication 1 ou 2, où la couche de contrôle de l'orientation magnétique (36) comprend au moins un élément parmi Fe, Co et Ni.

4. Support d'enregistrement magnétique vertical selon la revendication 3, où la couche de contrôle de l'orientation magnétique (36) comprend au moins un élément choisi dans un groupe constitué de Mo, Cr, Cu, V, Nb, Al, Si et B.

5. Support d'enregistrement magnétique vertical selon l'une quelconque des revendications précédentes, comprenant en outre une couche de soubassement (39) recevant la couche de contrôle de l'orientation magnétique (36).

6. Support d'enregistrement magnétique vertical selon la revendication 5, où ladite couche de soubassement (39) comprend au moins un élément choisi dans un groupe constitué de Ta, C, Mo, Ti, W, Re, Os et Hf.

7. Film à structure multicouche, comprenant :
une couche de contrôle de l'orientation magnétique (36) comprenant des grains cristallins situés en position adjacente les uns aux autres, ladite couche de contrôle de l'orientation magnétique (36) servant de couche pour contrôler l'orientation des cristaux dans une couche supérieure ;
une couche de contrôle de l'orientation non magnétique (37) s'étendant sur une surface de la couche de contrôle de l'orientation magnétique (36) et comprenant des grains cristallins situés en position adjacente les uns aux autres, ladite couche de contrôle de l'orientation non magnétique (37) servant de couche pour contrôler l'orientation cristalline dans une couche supérieure ; et
une couche cristalline (38) s'étendant sur une surface de la couche de contrôle de l'orientation non magnétique (37) et comprenant des grains cristallins ;
**caractérisé en ce que** :
lesdits grains cristallins ont une structure cubique à face centrée, (111) les plans des grains cristallins de la couche de contrôle de l'orientation magnétique (36) étant préférentiellement orientés parallèlement à une surface de la couche de contrôle de l'orientation magnétique (36) ;
lesdits grains cristallins de la couche de contrôle de l'orientation non magnétique (37) ont une structure hexagonale compacte, (002) les plans de grains cristallins de la couche de contrôle de l'orientation non magnétique (37) étant préférentiellement orientés parallèlement à la surface de la couche de contrôle de l'orientation magnétique (36) ; et
lesdits grains cristallins ont une structure hexagonale compacte, les axes de magnétisation facile des grains cristallins de la couche d'enregistrement (38) étant alignés dans une direction perpendiculaire à la surface de la couche de contrôle de l'orientation magnétique (36) ;
où chacun desdits grains cristallins de la couche de contrôle de l'orientation non magnétique (37) croît à partir d'un desdits grains cristallins de la couche de contrôle de l'orientation magnétique (36) et chacun desdits grains cristallins de la couche d'enregistrement magnétique (38) croît à partir d'un desdits grains cristallins de la couche de contrôle de l'orientation non magnétique (37).
